# EUROPEAN PATENT SPECIFICATION

(11) **EP 2 501 106 B1**
(45) Date of publication and mention of the grant of the patent: **29.04.2020**
(21) Application number: 11305256.7
(22) Date of filing: 10.03.2011
(51) Int. Cl.: G06F 16/23, H04L 29/08

(54) **System and method for session synchronization with independent external systems**
System und Verfahren zur Sitzungssynchronisierung mit unabhängigen externen Systemen
Système et procédé pour la synchronisation de sessions avec des systèmes externes indépendants

(43) Date of publication of application: 19.09.2012
(73) Proprietor: Amadeus S.A.S., 06410 Biot (FR)
(72) Inventor: Briet, Cécile, 06600, ANTIBES (FR); Mikaelian, Jérôme, 06410, BIOT (FR); Pierlot, Loïck, 06560, GARBEJAIRE (FR); Alberola, Bertrand, 06370, MOUANS SARTOUX (FR)
(74) Representative: Samson & Partner Patentanwälte mbB

(56) References cited:
- EP-A2- 1 271 318
- US-A1- 2007 118 572
- ROBERT H. WIEBENER, J: "Synchronizing Data Among Heterogeneous Databases", SYBASE TECHNICAL WHITE PAPER, 2010, pages 1-17, XP002646745,

## Description

### FIELD OF THE INVENTION

The present invention relates in general to data processing systems and in particular to client-server and web server software architectures used for database access. Still more specifically, the present invention relates to a method and a system to optimize data synchronization from independent and possibly heterogeneous external systems, in a transaction operated on a reference system, while minimizing the risk of data loss.

An independent external system is here to be understood as an external system controlled independently of the reference system. The reference system can be controlled by an agent or user, or can be automatic.

A heterogeneous external system is here to be understood as an external system with processes, applications and data structures defined in it that may differ from those of the reference system.

One example of application relates to travel booking and ticketing in the airline industry. The external system can be an automatic mechanism e.g. a robot operated by a global distribution system (GDS) such as Amadeus, a company with headquarters in Madrid, Spain. The automatic mechanism can for instance be arranged for updating records, such as passenger name records (PNR), directly in the store. Updates may consist in automatically cancelling non ticketed bookings.

According to another example, the external system is accessed by a travel agent and allows booking on a system independent of the reference system. The external system may for instance allow booking entertainment events whereas the reference system allows booking travel tickets.

### BACKGROUND OF THE INVENTION

Data synchronization can be defined as the task of keeping data consistent between various components of a system that works on given reference data and duplicates of such data. For that purpose, a version number is usually assigned to each data element. A data element may be defined by a data structure and a unique identifier.

The problem of data synchronization in a multi-user system in a shared data environment is a well known general problem that has been addressed in various contexts that command specific solutions according to system architectures, supported applications and any specific aspects and requirements of such systems.

Most synchronization methods found in the related art rely on a central component that acts as a coordinator between various users, applications, processes or systems that need to work on synchronized data. This is indeed a very generic concept that suggests having a unique manager in charge of the required coordination.

Based on this solution, US 7,539,778 discloses a client-server architecture for synchronization of data between different clients, by deploying a central synchronization server between clients and a Back End data store. A particular method of synchronization is disclosed, based on a cache for permanently buffering incoming updates into a permanent store by assigning a unique cache identifier to each of them. Write conflicts between the synchronization server writing new entries to the cache and updates replicated from backend to cache are solved using a blocking mechanism based on the cache identifiers. This synchronization solution is therefore based on a cache component that performs two tasks: solve write conflicts on updates and minimize the connection and the transport to the Back End data store.

A feature of US 7,539,778 relevant to data synchronization is the handling of write conflicts, using identifiers for cache entries. However, this method does not aim at providing data synchronization in a system based on a data store and other, independent and possibly heterogeneous, external systems.

To deal with the problem of concurrent access to a data store due to a local process and additional processes from independent and possibly heterogeneous external systems, a number of specific issues must be addressed.

For instance, in a transaction processing system such as an electronic commerce platform, there might be a wide range of products and multiple providers of such products. Data relative to products and their providers are usually kept in one storage facility provided in the processing system. However, some of these products might be available in a package containing additional products outsourced from external systems.

Moreover, several users and several transaction applications may access the whole system at the same moment. This is especially true in systems with inherent massive concurrent access such as mass market electronic commerce platforms. Data relative to a transaction session opened by a given user might become obsolete regarding availability, pricing etc. due to product management updates and due to transactions operated by other users and by other applications.

There might be further reasons of data obsolescence such as unexpected events affecting product availability and price, modifications of business policies decided by providers etc.

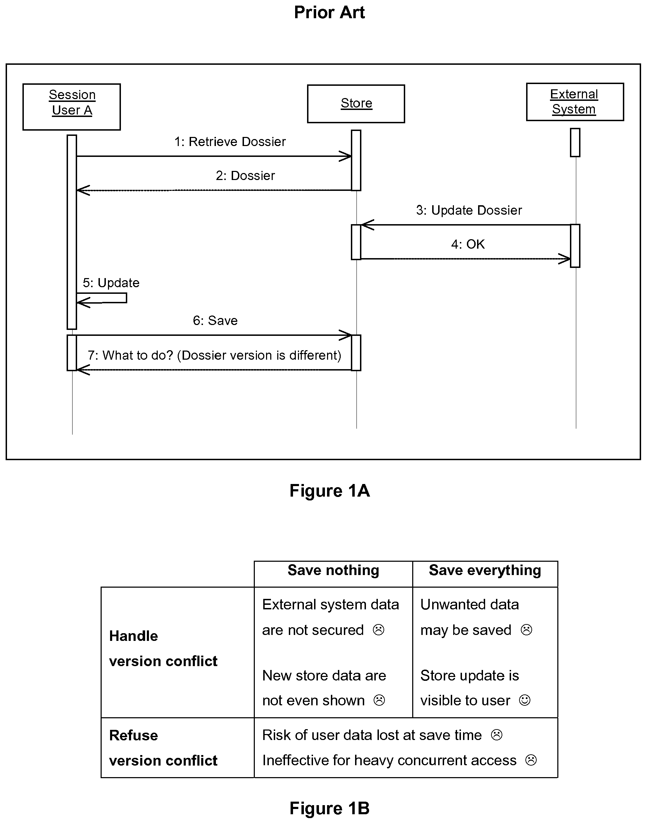

The resulting problem faced by such a system is summarized in FIG. 1A. The sequence diagram of FIG. 1A illustrates a version conflict between a user dossier in store and user session to save. Some data in the dossier in store have been modified by another application, possibly from an external system, while user A was working on data retrieved from a previous version of said dossier in store. Suppose that user A decides to save his/her work. The data to save are based on an obsolete version of said dossier in store. Such data are likely to be invalid.

In classical transaction processing systems, one may define three types of version handling methods to cope with the problem of version conflict.

A first option is to refuse version conflict. This is a simple and robust method that consists in rejecting any save order if the version of user dossier to be saved by user session does not match the current version of user dossier in store. This policy ensures that there are never any concurrent access issues since the only difference between the dossier in store and the one to be stored is the update resulting from user session. Although this method is very simple to implement and robust, its obvious limitation is that data to save from user session or from any external system may be rejected and user's work could be lost. In case of conflict, the only solution allowed is to ignore the current work, retrieve the new version from store, redo the work and try again to save, hoping that this time the dossier in store was not updated meanwhile. This approach is very aggressive and ineffective in heavy concurrent access business models.

A second option is to handle version conflict in a save everything approach. In current systems using sessions and synchronizing with other systems, there is only one synchronized source of data. Adding data from an external system implies to merge all the data in the session and then decide what to do; this is feasible if and only if the user session can be aware, via signaling means, that some data were made available by an external system. The first possible choice is to save this merged session straight away in the store. This is not a perfect mechanism from a user perspective since there may be some wrong or temporary data in user session, due to user work in progress, and these data will be saved in the dossier in store out of user's control. It allows the session to get an updated view from the store.

Alternatively, a third option is to handle version conflict in a save nothing approach. This means that data from an external system are put in session without being saved, pending user's decision to save. This increases the risk of data loss. If the user finally omits to save, data from an external system may never be retrieved again and would be lost. To simplify this issue, actual systems usually ask the user to save session data before synchronizing with external systems, but this is a strong constraint for the user. A second issue is that new data in the stored user dossier may not become visible to the user.

The relative drawbacks and benefits of the three methods of version conflict handling are summarized in FIG. 1B.

US7,539,778 B2 describes synchronization of data between different clients by using a central synchronization server linked to a Back End data store which additionally provides a cache for permanently buffering incoming updates into a permanent store by assigning an unique cache identifier. US 2007/0118572 A1 pertains to detecting concurrent changes in data. If a first version is not the same as a second version, a concurrency resolution process is to resolve inconsistencies in data.

### OBJECT OF THE INVENTION

Thus, it is a broad object of the invention to disclose a method and a system for improving data synchronization in a data processing architecture including a data store, client-server or web server systems for accessing said data store, and a plurality of independent and possibly heterogeneous systems external to said data store.

More specifically, the invention aims at solving a main technical problem related to the retrieval and aggregation of data from independent and possibly heterogeneous external sources in a data store.

It is a further more specific object of the invention that this must fit data processing architectures such as the ones deployed for airlines reservation systems, and characterized by a very high level of transactions from client side and very frequent updates for instance of the fare and availability data bases provided by airlines and of other products and services related to the travel and tourism industry.

Further objects, features and advantages of the present invention will become apparent to the ones skilled in the art upon examination of the following description in reference to the accompanying drawings.

### SUMMARY OF THE INVENTION

The invention is defined by the independent claims. In the following are disclosed a method and a system for improving data synchronization in a data processing architecture including a data store, client-server or web server systems for accessing said data store, and a plurality of independent and possibly heterogeneous systems external to said data store.

This brings a solution to a main technical problem related to the retrieval and aggregation of data from independent and possibly heterogeneous external sources in a data store.

Additionally, this provides a version merge mechanism that improves version conflict management methods found in the prior art. The method handles concurrent update of a given user data in said data store occurring when said data are simultaneously modified by the user and by other processes operating on said external systems. For that purpose, it is proposed to define and apply sets of rules to determine which source of information is given priority in case two channels want to update the same data in a dossier at the same time.

This results in removing the risk of data loss caused by version conflict between data retrieved and modified by a user session and an updated version of the stored data not matching the retrieved version. More specifically, an advantage provided by the invention is that user related data, including data from external systems, are saved without risk of loss, even if the user has started a user session and is still working on it.

A further advantage obtained is a way of updating user session with data from the external systems not forcing user data to be saved, thus preventing data not yet validated from being saved.

More specifically, the invention discloses a method of updating a user session with external data received from external systems, the method comprising the following steps performed with at least one data processor:
- receiving, at a synchronizer in communication with the user session and a data store, a request from the user session to retrieve a stored user dossier from the data store, wherein a dossier is a set of data;
- retrieving, at the synchronizer, the stored user dossier from the data store, creating, at the synchronizer, from the stored user dossier an intermediate dossier comprising at least the content of the stored user dossier and delivering the intermediate dossier to the user session, as a session dossier, for operations by a user;
- storing temporarily, in an event queue in communication with the synchronizer, external data received and/or updating, at the data store, the stored user dossier with external data received;
- receiving, at the synchronizer, a user update performed on the session dossier, updating the session dossier with the received user update and returning the updated session dossier to the user session;
- upon receiving, at the synchronizer, a request for refresh sent by the user session:
- retrieving, at the synchronizer, the updated stored user dossier,
- retrieving, at the synchronizer, all events in the event queue,
- merging, at the synchronizer, the retrieved updated stored user dossier with updates from all the events retrieved from the event queue and saving the merged dossier to the data store, and
- merging, at the synchronizer, the merged dossier with the updated session dossier and returning the result to the user session, as the session dossier; and
- upon receiving, at the user session, an instruction to close the session asking a question to the user through a user interface of the user session about saving or not saving the session dossier:
   - upon receiving an instruction from the user for saving the session dossier, updating the session dossier through merging received external data, the stored dossier and the session dossier, and saving it in the data store; and
   - upon not receiving an instruction for saving the session dossier or upon receiving an instruction to delete the session dossier, not saving the session dossier and not updating the stored dossier in the data store.

Therefore, the session receives an updated intermediate dossier comprising the data sent by the external system and the latest version stored dossier. Thus, the user is further able to work on an up-to-date version of the intermediate dossier. At this stage, the stored dossier has not been modified by the user. While all data received by external systems are saved in the stored dossier, all changes performed by the session can therefore be further saved in the data store or be deleted without modifying the stored dossier in the data store. Thus, the invention eases significantly the work done by the user by preventing loss of data from external systems without forcing the user to save updates of its session.

Advantageously, the external system can be heterogeneous with the data store. This is possible thanks to the merge function performed by the synchronizer.

According to the invention, said external data from the external system are received by the data store. Upon reception of said external data by the data store the data store performs the step of modifying the stored dossier so that it comprises said external data and the step of saving the stored dossier in the data store.

The step where the synchronizer updates the intermediate dossier so that the intermediate dossier comprises said external data occurs after the steps of modifying the stored dossier so that it comprises said external data and of saving the stored dossier in the data store and comprises the following steps: the synchronizer retrieves the stored dossier from the data store and updates the intermediate dossier with the stored dossier.

Advantageously, the steps of modifying the stored dossier so that it comprises said external data and of saving the stored dossier in the data store occur upon reception of the external data by the data store. After receiving at the synchronizer a request for refresh sent by the session and before the step wherein the synchronizer sends the intermediate dossier to the session to replace the session dossier, then the synchronizer updates the intermediate dossier with the stored dossier.

According to the invention, said external data from the external system are received at an event queue in communication with the synchronizer. The step where the synchronizer updates the intermediate dossier so that the intermediate dossier comprises said external data comprises the following steps: the synchronizer retrieves said external data from the event queue, retrieves the stored dossier from the data store, and then updates the intermediate dossier through merging said external data and the stored dossier.

The synchronizer may first retrieve said external data from the event queue and then retrieve the stored dossier from the data store. Alternatively, the synchronizer first retrieves the stored dossier from the data store and then retrieves said external data from the event queue.

For performing the steps of modifying the stored dossier so that it comprises said external data and of saving the stored dossier in the data store, the synchronizer saves in the data store the intermediate dossier. The synchronizer then initiates the step wherein the data store saves the intermediate dossier.

Upon reception of said external data from the external system, the event queue sends to said external system a confirmation that said data are correctly received.

After the step of receiving at the synchronizer a request for refresh sent by the session and before the step wherein the synchronizer sends the intermediate dossier to the session to replace the session dossier, the method performs the steps wherein the synchronizer updates the intermediate dossier through merging said external data and the stored dossier.

The step of receiving external data from the external system comprises receiving external data by the data store and receiving additional external data by an event queue in communication with the synchronizer. Upon reception of said external data by the data store then the data store performs the step of modifying the stored dossier so that it comprises said external data and the step of saving the stored dossier in the data store. The synchronizer retrieves said additional external data from the event queue, retrieves the stored dossier from the data store, updates the intermediate dossier through merging said additional external data and the stored dossier and replaces the stored dossier with the intermediate dossier.

Thus, at this stage, the stored dossier and the intermediate dossier comprise the external data received at the data store and the additional external data received at the event queue.

Then the synchronizer can update the intermediate dossier through merging said user updates and the intermediate dossier for providing the user with an intermediate dossier comprising the external data received at the data store, the additional external data received at the event queue and the user updates.

Upon the update of the intermediate dossier by the synchronizer through merging said additional external data and the stored dossier, the synchronizer saves in the data store the intermediate dossier. Thus, at this stage, the stored dossier comprises the external data received at the data store and the additional external data received at the event queue.

The synchronizer receives from the session additional user updates, then the synchronizer retrieves the stored dossier from the data store, updates the intermediate dossier through merging the stored dossier with the additional user updates from the session and sends the intermediate dossier to the session to replace the session dossier.

Upon receiving an instruction from the user for saving the session dossier, the session provides the user with a possibility to save the intermediate dossier in the data store. Thus, the session provides the user with a possibility to update the intermediate dossier through merging external data received from the external system, the stored dossier and the session dossier, and then to save the intermediate dossier as updated in the data store. Therefore, the work possibly performed by the user through the session and all data possibly received from the at least one external system are saved in the data store. Thus, next time the synchronizer retrieves the stored dossier, that retrieved version will comprise updates from the session and data from the at least one external system.

According to the invention, the possibility is a question asked to the user through a user interface of the session about saving or not saving the session dossier, said question being asked when the session receives an instruction to close the session.

The session receives an instruction for saving the session dossier and sends to the synchronizer a save request, wherein upon reception of the save request the synchronizer updates the intermediate dossier through merging data received from the external system, the stored dossier and the session dossier, and saves the intermediate dossier as updated in the data store.

Alternatively, if the session does not receive instruction to save the session dossier or if the session receives an instruction to delete the session dossier, then the user updates are not saved and the session does not update the stored dossier in the data store.

The method is performed as a result of execution of a computer software by at least one data processor, the computer software being stored in a non-transitory computer-readable memory medium.

Another subject matter of the invention is a synchronizer to update a user session with external data received at a data store from external systems configured to perform the above described method.

### BRIEF DESCRIPTION OF THE DRAWINGS

FIGURE 1A shows an example of concurrent access in data store.
FIGURE 1B discusses relative drawbacks and benefits of existing methods of version conflict handling.
FIGURE 2 shows an example of system high-level software architecture to which the invention advantageously applies.
FIGURE 3 shows an example of detailed system architecture to which the invention advantageously applies.
FIGURE 4 shows an example of detailed system architecture to which the invention advantageously applies, with communication flows for a sequence of typical tasks to be performed.
FIGURE 5 provides an example of sequential diagram of the various typical steps that result from the processing of end-user requests and actions from external systems.
FIGURE 6 provides an overview of the merge process.
FIGURE 7 explains how a set of rules is applied on data intersection between external data and session data, and for two dossiers in general.
FIGURE 8 shows an example of detailed system architecture to which the invention advantageously applies, with communication flows for a sequence of typical tasks to be performed in the case of asynchronous event handling enhanced by a scheduled task.
FIGURE 9 provides an example of sequential diagram of the various typical steps that result from the processing of end-user requests and actions from external systems in the case of asynchronous event handling enhanced by a scheduled task.
FIGURE 10 shows an example of detailed system architecture to which the invention advantageously applies, with communication flows for a sequence of typical tasks to be performed in the case of a store update only.
FIGURE 11 provides an example of sequential diagram of the various typical steps that result from the processing of end-user requests and actions from external systems in the case of a store update only.
FIGURE 12 shows an example of detailed system architecture to which the invention advantageously applies, with communication flows for a sequence of typical tasks to be performed in the case of an asynchronous update by an external system and no user session.
FIGURE 13 provides an example of sequential diagram of the various typical steps that result from the processing of actions from external systems in the case of an asynchronous update by an external system and no user session.

### DETAILED DESCRIPTION

The invention is defined by the independent claims.

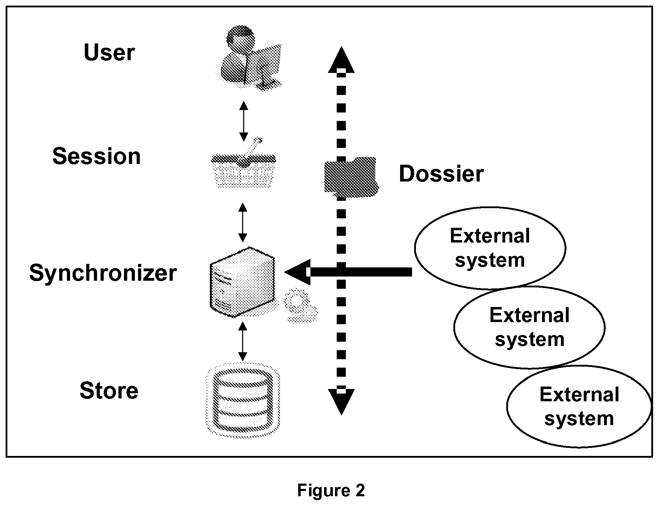

**Figure 2** shows an example of high-level system architecture of the present invention, in which a synchronizer 4 component is located between a data store 1 and a user session 3 and receives data from at least an external systems 5, 5'. The function of this synchronizer 4 is to aggregate and merge data. For any dossier retrieved from data store 1 for a given user session 3, and to receive updates from at least an external system 5, 5' and from user session 3, the synchronizer 4 creates or updates an intermediate dossier. The intermediate dossier can be updated by merging the current intermediate dossier with the session dossier and with dossier updates received from external systems if such updates are available. The synchronizer 4 updates the intermediate dossier according to a predefined set of rules or by prompting the user whenever necessary.

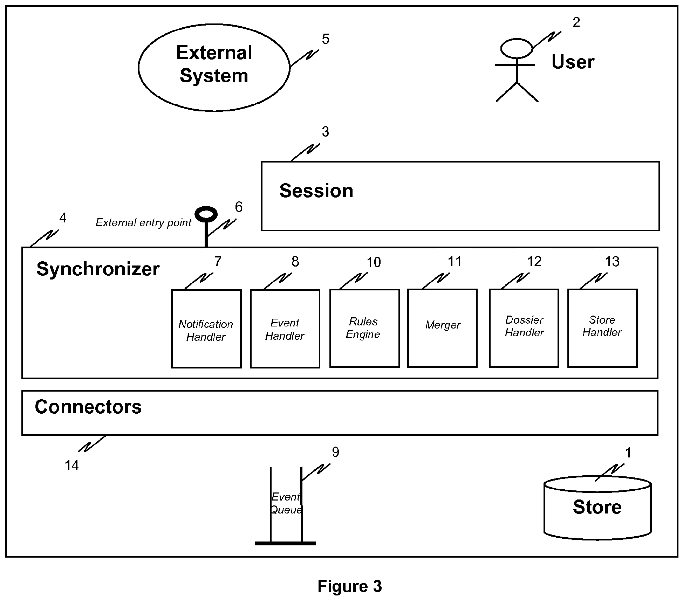

**Figure 3** shows an example of detailed system architecture to which the invention advantageously applies. This architecture will be used to illustrate different scenarios of interest and, for that purpose, the communication flows for each one of such scenarios will be detailed. Accordingly, all elements shown in **Figure 3** are described in subsequent figures related to scenarios of interest.

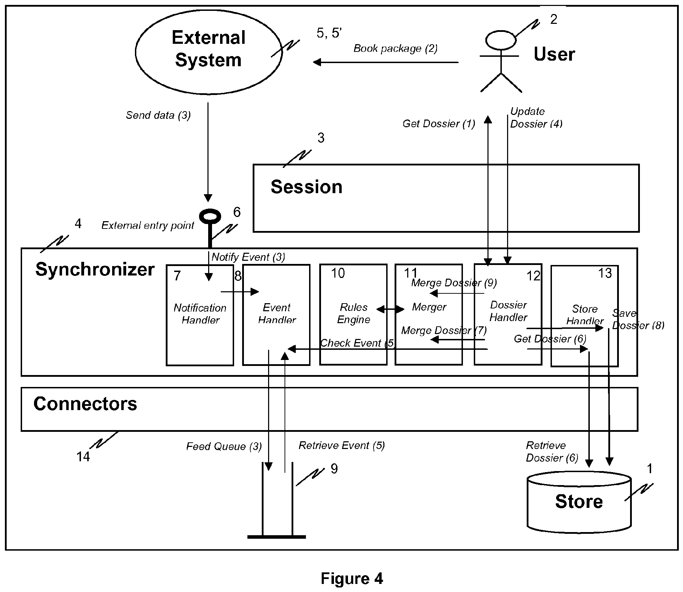

**Figure 4** shows an example of detailed system architecture to which the invention advantageously applies. A sequence of typical tasks to be performed by the system and related communication flows are also shown. This sequence corresponds to the following scenario:
At step 1, a user 2 is working in a user session 3 and for that matter a user dossier is retrieved from data store 1 and displayed. For that step, the stored dossier is firstly retrieved from data store 1 by the synchronizer 4, as an intermediate dossier. The intermediate dossier is then sent to user session 3 as a session dossier. This is done through a dossier handler 12 and a store handler 13. The store handler is in charge of retrieving stored dossiers from data store 1 and saving updated dossiers into data store 1. The dossier handler is in charge of receiving requests and updates from user session 3, sending the intermediate dossier to user session 3 and managing all internal tasks of the synchronizer 4 related to the retrieval and save of the intermediate dossier, and to update-merge operations.

At step 2, in order to do a transaction that operates on an external system 5', such as booking a package, the user switches to that external system 5', e.g. by opening a tab provided in the user interface, and performs the transaction.

At step 3, the external system 5' sends the data corresponding to the transaction and the reference to the current dossier to an external entry point 6. The external entry point can be any suitable channel connecting the external system 5' and the synchronizer 4. It can be provided by a web service or any specific means. The data sent by the external system 5' are stored temporarily in an event queue 9 through a notification handler 7 and an event handler 8. The event queue 9 is a facility that holds data sent by external systems. The notification handler is a facility in charge of receiving notifications from external systems. The event handler is a facility in charge of handling events, which include such tasks as: to put events in the queue, to retrieve events, to find events to retrieve for a given dossier...

At step 4, the user triggers any action, such as switch to dossier tab in the user interface, save dossier, update dossier..., which refreshes the session dossier. For that purpose, the intermediate dossier is updated and returned to user session 3. This is done at steps 5 to 9.

At step 5, the synchronizer 4 checks the event queue 9 for any event to be processed for the current dossier. All events in queue are retrieved.

At step 6, the synchronizer 4 retrieves the latest dossier saved in data store 1.

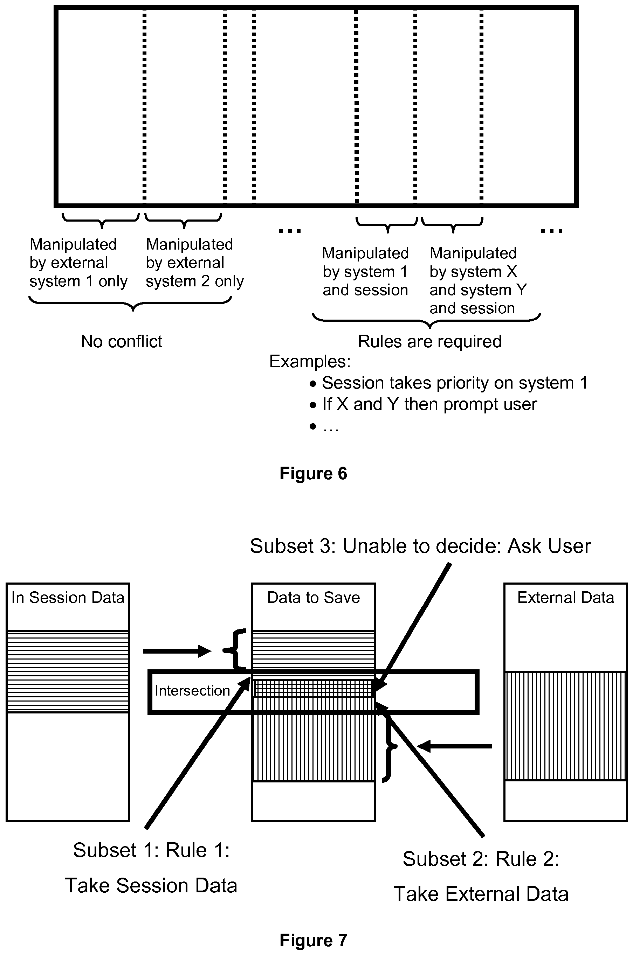

At step 7, the synchronizer 4 merges the latest dossier with the updates from all the events previously retrieved. This is done by a merger 11 with rules supplied by a rules engine 10. The function performed by the merger will be explained in the description of **Figure 6****.** The function performed by the rules engine will be explained in the description of **Figure 7****.**

At step 8, the synchronizer 4 saves the merged dossier in data store 1 to avoid data loss.

At step 9, the synchronizer 4 merges the merged dossier with the session dossier and returns the result to the user. This is the dossier displayed to the user.

After step 9, the user may continue to work and, upon completion of the process according to what the session is for, the user may save the dossier for final validation of the transaction; or even before completing the process, the user may save the dossier and rework on it later. Therefore, the session would continue by redoing the previous steps from step 2 or from step 4, until the session dossier is finally saved, or until the user decides to close the session without saving any changes.

Therefore, the invention provides a method of data aggregation particularly suited to a transaction oriented system comprising a main system and other, independent and possibly heterogeneous, external systems.

That method is based on a system architecture and a merge function that improve the methods already known.

The merge function relies on a mechanism that removes the risk of data loss caused by version conflict between data retrieved and modified in user session 3 and an updated version of the stored data not matching the retrieved version.

More specifically, user related data, including data from external systems, are saved without risk of loss even if the user has started a user session 3 and is still working on it.

A further advantage of the method is a way of updating user session 3 with data from the external sources not forcing user data to be saved, thus preventing data not yet validated from being saved.

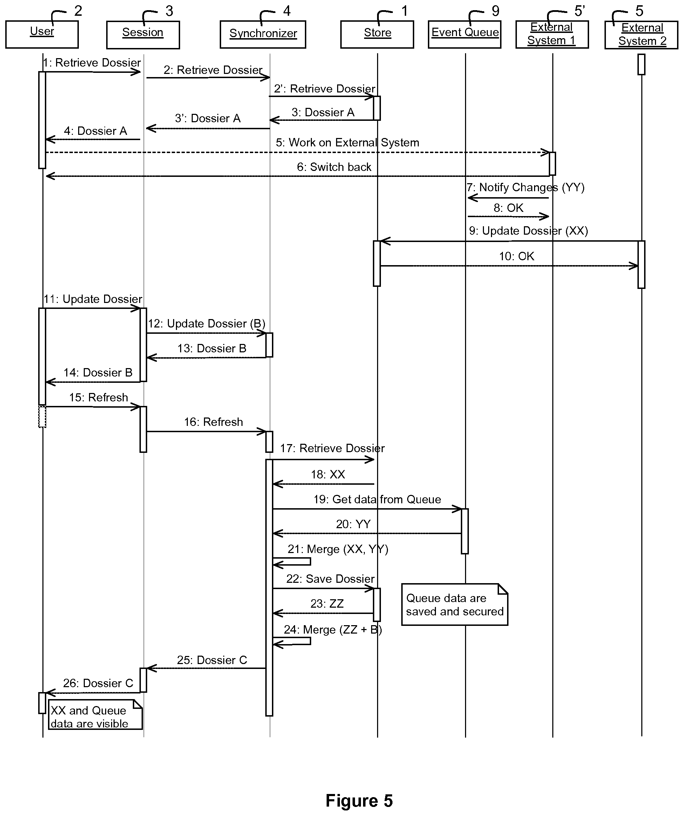

**Figure 5** provides an example of sequential diagram showing the various steps that result from the processing of end user requests and notifications from external systems 5, 5' in a typical scenario. Note that, in this diagram, the notification received from the external system 5' might be triggered by the user, for instance when the user switches to that external system and performs an action that cause that external system to send data to the intermediate dossier.

At steps 1, 2, 2', 3, 3', 4, a user is working in a user session 3 and for that matter a user dossier is retrieved from data store 1 and displayed. For that, the stored dossier is firstly retrieved from data store 1 by the synchronizer 4, as an intermediate dossier. The intermediate dossier is then sent to user session 3 as a session dossier.

At steps 5, 6, in order to do a transaction that operates on an external system 5', such as booking a package, the user switches to that external system 5', e.g. by opening a tab provided in the user interface, performs the transaction and switches back to the opened session.

As a result, an event will be sent to the queue. This is the important fact here.

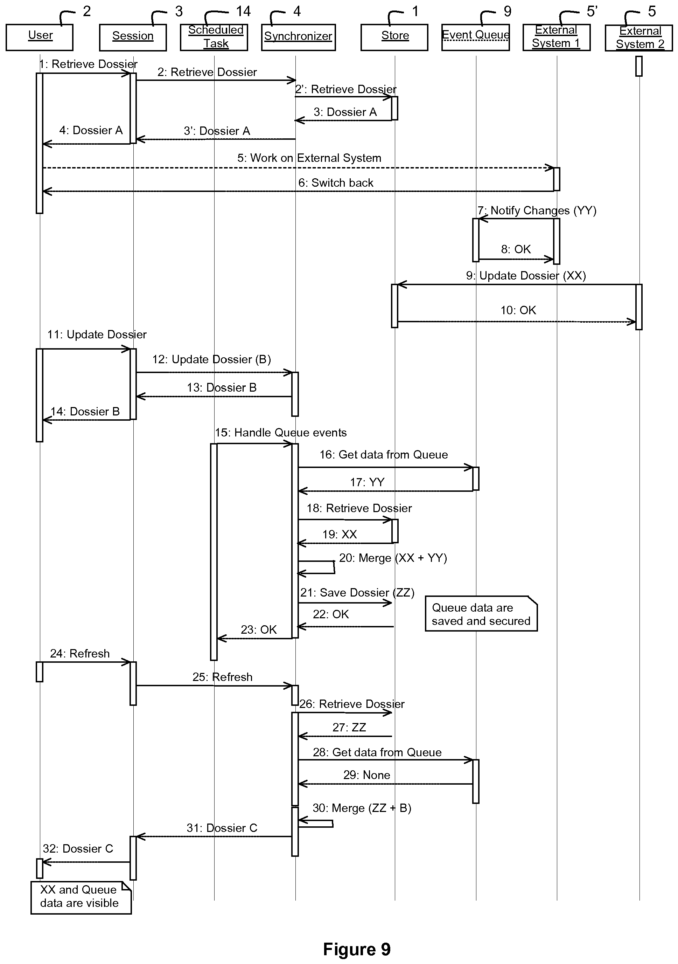

Actually, the update from the external system 5' may be triggered by the user switching to that external system 5' or by any independent internal process of the external system. Thus steps 5 and 6 relate to a particular example and do not restrict the scope of the invention. Steps 5 and 6 are then only optional and are illustrated with dotted lines. This also applies to figure 9.

At steps 7, 8, the external system 5' sends a notification of changes related to data in the user dossier. At the synchronizer 4, the data sent by the external system 5' are stored temporarily in the event queue 9 through the notification handler and the event handler.

At steps 9, 10, an external system 5 directly updates user dossier in data store 1.

At steps 11, 12, 13, 14, user session 3 is updated due to the user working.

At steps 15, 16, the user triggers a refresh of user session 3.

At steps 17, 18, to start refreshing user session 3, the synchronizer 4 retrieves the latest dossier saved in data store 1.

At steps 19, 20, the synchronizer 4 checks the event queue 9 for any event to be processed for the current dossier. All events in queue are retrieved.

At steps 21, the synchronizer 4 merges the latest dossier with the updates from all the events previously retrieved.

At steps 22, 23, the synchronizer 4 saves the merged dossier in data store 1 to avoid data loss. At this point, the updates made by external systems 5, 5' have been saved and secured.

At steps 24, the synchronizer 4 merges the merged dossier with the session dossier.

At steps 25, 26, the synchronizer 4 returns the result to the user. This is the dossier displayed to the user. Therefore the user now works on a refreshed session synchronized with the updated stored dossier.

Thus, the invention provides a solution to the technical problem related to the retrieval and aggregation of data from independent and possibly heterogeneous external sources in a data store 1.

The invention also allows dealing with the risk of data loss caused by version conflict between stored data retrieved by a user session 3 and an updated version of the stored data not matching the retrieved version.

The method according to the invention also enables to receive and merge data from external sources without forcing user temporary data to be saved.

**Figure 6** provides an overview of the merge process. The version merge mechanism of the invention aims specifically at avoiding a risk of data loss caused by version conflict between data retrieved and modified in user session 3 and an updated version of the stored data not matching the retrieved version. The principle of the method of the invention is to immediately merge and save data received from external systems 5, 5' and merge and save data from user session 3 only upon request by user session 3. The merge process requires identifying data intersections and applying priority rules to data intersections. This is a two stage process, carried out as follows.

The first stage of the merge process is to identify the zones of intersection between data that are exchanged by the data store 1 and the external systems 5, 5'. This is preferably done at system configuration time, i.e. each time a new external system is integrated in the architecture. The data to integrate are defined and in turn intersections are defined. Then priority rules are defined and configured for run time usage.

The second stage is the run time stage of the merge process. At run time the system checks if there are data in the intersection zone of the exchanged data. If there are, the rules for each attribute in the intersection zone are applied following the configuration.

**Figure 7** explains how a set of rules is applied on data intersection between external data and session data, and for two dossiers in general. This is how rules are applied for a given data intersection at run time.

Three subsets have been identified in the intersection between data in session and external data. A set of rules has been defined, which provides a rule for each subset. Two rules automatically assign a preferred source to the first and second target subsets. There is no automatic rule for the third subset. This subset is dealt with by prompting the user.

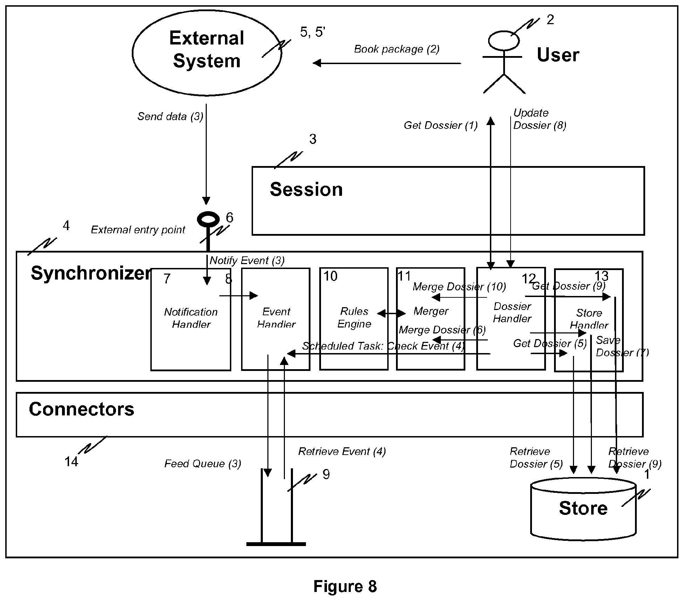

**Figure 8** shows an example of detailed system architecture to which the invention advantageously applies, with communication flows for a sequence of typical tasks to be performed in the case of asynchronous event handling enhanced by a scheduled task 14.

Steps 1 to 3 are identical to steps 1 to 3 of FIG. 4.

At step 4, a scheduled task 14, independent from any session, requests the synchronizer 4 to check the event queue 9 for any event to be processed for the current dossier. All events in queue, if any, are retrieved.

Steps 5 to 7 are identical to steps 6 to 8 of FIG. 4.

Step 8 is identical to step 4 of FIG. 4.

Step 9 is identical to step 6 of FIG. 4.

Step 10 is identical to step 9 of FIG. 4.

Thus, a further advantage of the invention is the possibility for external systems 5, 5' to notify and send updates to the main system via asynchronous communication.

**Figure 9** provides an example of sequential diagram of the various typical steps that result from the processing of end-user requests and actions from external systems 5, 5' in the case of asynchronous event handling enhanced by a scheduled task 14. This sequential diagram relates to the scenario and communication flows illustrated by FIG. 8.

Steps 1 to 14 are identical to steps 1 to 14 of FIG. 5.

At step 15, a scheduled task 14, independent from any session, requests the synchronizer 4 to check the event queue 9 for any event to be processed for the current dossier.

At steps 16, 17, all events in queue, if any, are retrieved.

Steps 18, 19 are identical to steps 17, 18 of FIG. 5.

Steps 20, 21, 22 are identical to steps 21, 22, 23 of FIG. 5.

At step 23, the synchronizer 4 has completed the scheduled task 14 and the scheduled task 14 is closed.

Steps 24 to 29 are identical to steps 15 to 20 of FIG. 5. After step 29, since there was no more data in queue, the synchronizer 4 only has to merge session data with the stored dossier just retrieved.

Steps 30 to 32 are identical to steps 24 to 26 of FIG. 5.

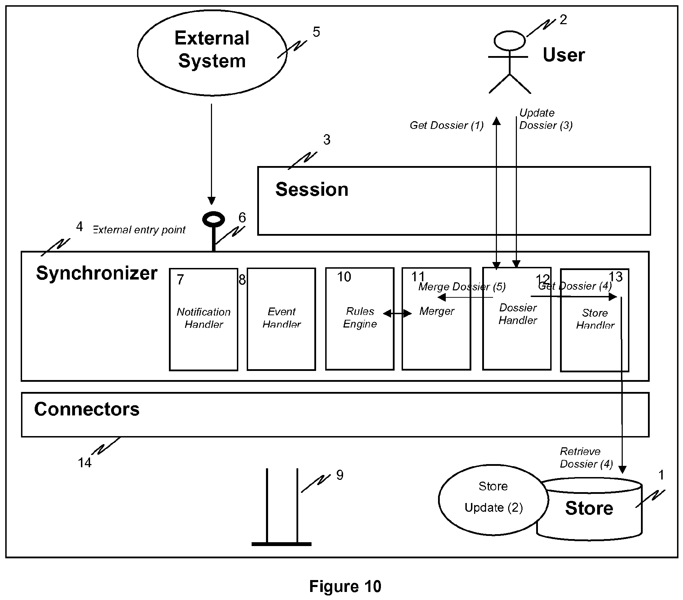

**Figure 10** shows an example of detailed system architecture to which the invention advantageously applies, with communication flows for a sequence of typical tasks to be performed in the case of a store update only.

Step 1 is identical to step 1 of FIG. 4.

At step 2, independently from the intermediate dossier, the stored dossier is updated directly in the data store 1.

Step 3 is identical to step 4 of FIG. 4.

Step 4 is identical to step 6 of FIG. 4.

Step 5 is identical to step 9 of FIG. 4.

Thus, a further advantage of the invention is the possibility for external systems 5 to directly send updates to the main system, i.e. without notification of it to the synchronizer 4 and without forcing user session 3 to be saved. The update will be become visible when user session 3 is refreshed.

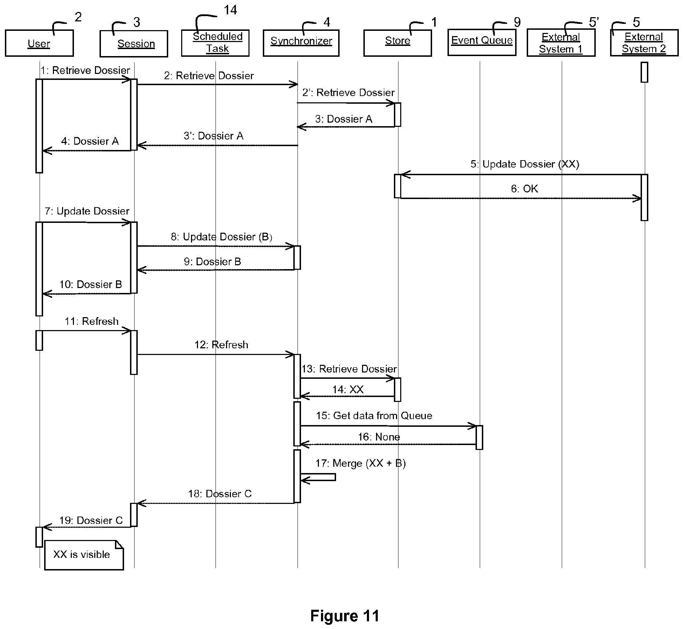

**Figure 11** provides an example of sequential diagram of the various typical steps that result from the processing of end-user requests and actions from external systems 5 in the case of a store update only. This sequential diagram relates to the scenario and communication flows illustrated by FIG. 10.

Steps 1 to 4 are identical to steps 1 to 4 of FIG. 5.

Steps 5, 6 are identical to steps 9, 10 of FIG. 5.

Steps 7 to 10 are identical to steps 11 to 14 of FIG. 5.

Steps 11 to 16 are identical to steps 15 to 20 of FIG. 5.

At next step, since there was no data in the event queue 9, the synchronizer 4 only has to merge session data with the stored dossier just retrieved.

Steps 17 to 19 are identical to steps 22 to 24 of FIG. 5.

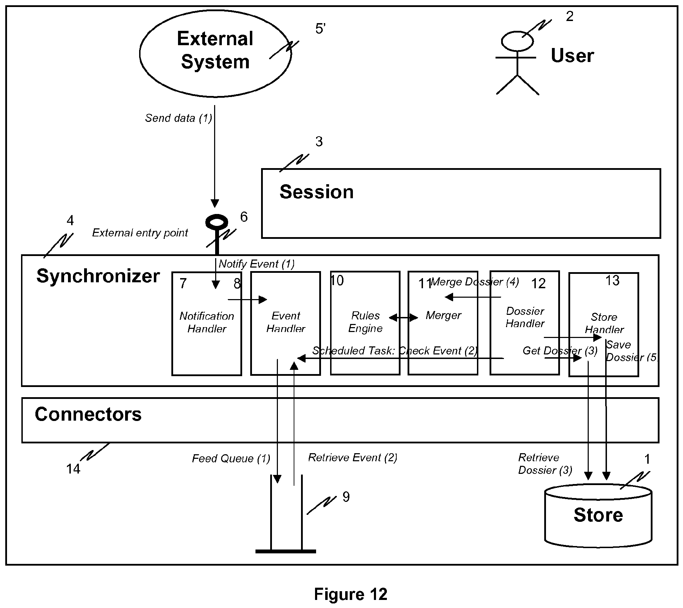

**Figure 12** shows an example of detailed system architecture to which the invention advantageously applies, with communication flows for a sequence of typical tasks to be performed in the case of an asynchronous update by an external system and no user session 3.

At step 1, the data corresponding to a transaction are updated in an external system. The external system sends the data corresponding to the transaction and the reference to the corresponding dossier to the external entry point. The data sent by the external system are stored temporarily in the event queue 9 through the notification handler and the event handler.

Step 2 is identical to step 4 of FIG. 8.

Steps 3 to 5 are identical to steps 5 to 7 of FIG. 8.

FIG. 12 shows that, even if there is no active user session 3, synchronization with an external system can be done via a scheduled task 14.

Thus, a further advantage of the invention is the possibility for external systems 5' to notify and send updates to the main system and update a given user dossier at any time, whether there is an active user session 3 or there is not. Therefore, data from external systems 5' are automatically saved in the stored dossier.

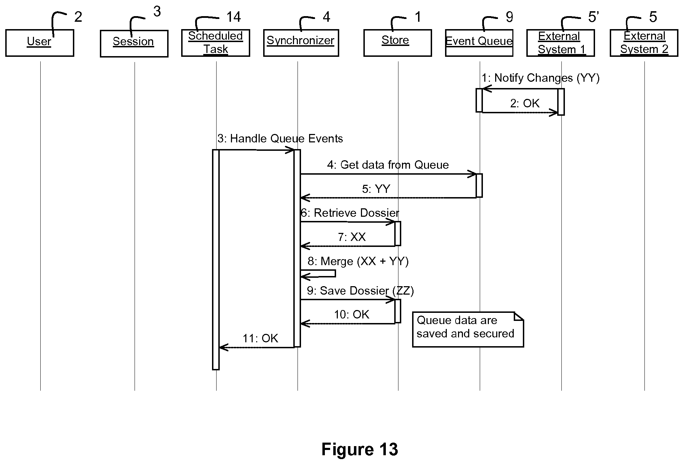

**Figure 13** provides an example of sequential diagram of the various typical steps that result from the processing of end-user requests and actions from external systems 5' in the case of an asynchronous update by an external system and no user session 3. This sequential diagram relates to the scenario and communication flows illustrated by FIG. 12.

Steps 1, 2 are identical to steps 7, 8 of FIG. 9.

Steps 3 to 11 are identical to steps 15 to 23 of FIG. 9.

Thus, the disclosed invention provides a solution to secure data received from external systems and avoid saving unwanted data such as non validated session data, while allowing store updates to be visible to the user.

## Claims

1. A method of updating a user session (3) with external data received from external systems (5, 5'), **characterized in that** it comprises the following steps performed with at least one data processor:
- receiving, at a synchronizer (4) in communication with the user session (3) and a data store (1), a request from the user session (3) to retrieve a stored user dossier from the data store (1), wherein a dossier is a set of data;
- retrieving, at the synchronizer (4), the stored user dossier from the data store (1), creating, at the synchronizer (4), from the stored user dossier an intermediate dossier comprising at least the content of the stored user dossier and delivering the intermediate dossier to the user session (3), as a session dossier, for operations by a user (2);
- storing temporarily, in an event queue (9) in communication with the synchronizer (4), external data received and/or updating, at the data store (1), the stored user dossier with external data received;
- receiving, at the synchronizer (4), a user update performed on the session dossier, updating the session dossier with the received user update and returning the updated session dossier to the user session;
- upon receiving, at the synchronizer (4), a request for refresh sent by the user session(3):
- retrieving, at the synchronizer (4), the updated stored user dossier,
- retrieving, at the synchronizer (4), all events in the event queue (9),
- merging, at the synchronizer (4), the retrieved updated stored user dossier with updates from all the events retrieved from the event queue (9) and saving the merged dossier to the data store (1), and
- merging, at the synchronizer (4), the merged dossier with the updated session dossier and returning the result to the user session; and
- upon receiving, at the user session (3), an instruction to close the user session (3), asking a question to the user through a user interface of the user session (3) about saving or not saving the session dossier:
- upon receiving an instruction from the user for saving the session dossier, updating the session dossier through merging received external data, the stored dossier and the session dossier, and saving it in the data store (1); and
- upon not receiving an instruction for saving the session dossier or upon receiving an instruction to delete the session dossier, not saving the session dossier and not updating the stored dossier in the data store (1).

2. Computer program product stored in a non-transitory computer-readable memory medium and performing the method according to claim 1.

3. A Synchronizer to update a user session (3) with external data received at a data store (1) from external systems (5, 5') configured to perform the method according to claim 1.

## Patentansprüche

1. Verfahren zum Aktualisieren einer Benutzersitzung (3) mit externen Daten, die von externen Systemen (5, 5') empfangen werden, **dadurch gekennzeichnet, dass** es die folgenden Schritte umfasst, die mit wenigstens einem Datenprozessor ausgeführt werden:
- Empfangen, an einem Synchronisierer (4), der mit der Benutzersitzung (3) und einem Datenspeicher (1) kommuniziert, einer Anforderung von der Benutzersitzung (3) um einen gespeicherten Benutzereintrag aus dem Datenspeicher (1) abzurufen, wobei ein Eintrag ein Satz von Daten ist;
- Abrufen, im Synchronisierer (4), des gespeicherten Benutzereintrags aus dem Datenspeicher (1), und Erzeugen, im Synchronisierer (4) und aus dem gespeicherten Benutzereintrag, eines Zwischeneintrags, der wenigstens den Inhalt des gespeicherten Benutzereintrags umfasst, und Bereitstellen des Zwischeneintrags an die Benutzersitzung (3) als ein Sitzungseintrag für Aktionen durch einen Benutzer (2);
- temporäres Speichern, in einer Ereigniswarteschlange (9), die in Kommunikation mit dem Synchronisierer (4) ist, von empfangenen externen Daten und/oder Aktualisieren, im Datenspeicher (1), des gespeicherten Benutzereintrags mit den empfangenen externen Daten;
- Empfangen, im Synchronisierer (4), einer Benutzeraktualisierung, die auf dem Benutzereintrag ausgeführt wird, Aktualisieren des Sitzungseintrags mit der empfangenen Benutzeraktualisierung und Zurücksenden des aktualisierten Sitzungseintrags an die Benutzersitzung;
- nach dem Empfangen, im Synchronisierer (4), einer von der Benutzersitzung (3) gesendeten Anforderung zum Aktualisieren:
- Abrufen, im Synchronisierer (4), des aktualisierten gespeicherten Benutzereintrags,
- Abrufen, im Synchronisierer (4), aller Ereignisse aus der Ereigniswarteschlange (9),
- Zusammenführen, im Synchronisierer (4), des abgerufenen aktualisierten gespeicherten Benutzereintrags mit Aktualisierungen aus allen Ereignissen, die aus der Ereigniswarteschlange (9) abgerufen wurden, und Speichern des zusammengeführten Eintrags im Datenspeicher (1), und
- Zusammenführen, im Synchronisierer (4), des zusammengeführten Eintrags mit dem aktualisierten Sitzungseintrag und Zurücksenden des Ergebnisses an die Benutzersitzung; und
- nach dem Empfangen, in der Benutzersitzung (3), einer Anweisung zum Beenden der Benutzersitzung (3), Stellen einer Frage an den Benutzer über eine Benutzerschnittstelle der Benutzersitzung (3), ob der Sitzungseintrag gespeichert oder nicht gespeichert werden soll:
- nach dem Empfangen einer Anweisung vom Benutzer zum Speichern des Sitzungseintrags, Aktualisieren des Sitzungseintrags durch das Zusammenführen empfangener externer Daten, des gespeicherten Eintrags und des Sitzungseintrags und dessen Speichern im Datenspeicher (1); und
- wenn keine Anweisung zum Speichern des Sitzungseintrags empfangen wird oder nach dem Empfangen einer Anweisung zum Löschen des Sitzungseintrags, kein Speichern des Sitzungseintrags und keine Aktualisierung des gespeicherten Eintrags im Datenspeicher (1).

2. Computerprogrammprodukt, das in einem nichtflüchtigen computerlesbaren Speichermedium gespeichert ist und das das Verfahren nach Anspruch 1 ausführt.

3. Synchronisierer zum Aktualisieren einer Benutzersitzung (3) mit externen Daten, die in einem Datenspeicher (1) von externen Systemen (5, 5') empfangen werden, der dafür eingerichtet ist, das Verfahren nach Anspruch 1 auszuführen.

## Revendications

1. Procédé de mise à jour d'une session d'utilisateur (3) avec des données externes reçues en provenance de systèmes externes (5, 5'), **caractérisé en ce qu'**il comprend les étapes suivantes effectuées avec au moins un processeur de données :
- recevoir, au niveau d'un synchroniseur (4) en communication avec la session d'utilisateur (3) et un magasin de données (1), une demande en provenance de la session d'utilisateur (3) pour récupérer un dossier d'utilisateur stocké à partir du magasin de données (1), où un dossier est un ensemble de données ;
- récupérer, au niveau du synchroniseur (4), le dossier d'utilisateur stocké à partir du magasin de données (1), créer, au niveau du synchroniseur (4), à partir du dossier d'utilisateur stocké un dossier intermédiaire comprenant au moins le contenu du dossier d'utilisateur stocké et remettre le dossier intermédiaire à la session d'utilisateur (3), en tant que dossier de session, pour des opérations par un utilisateur (2) ;
- stocker temporairement, dans une file d'attente d'événements (9) en communication avec le synchroniseur (4), des données externes reçues et/ou mettre à jour, au niveau du magasin de données (1), le dossier d'utilisateur stocké avec des données externes reçues ;
- recevoir, au niveau du synchroniseur (4), une mise à jour d'utilisateur effectuée sur le dossier de session, mettre à jour le dossier de session avec la mise à jour d'utilisateur reçue et retourner le dossier de session mis à jour à la session d'utilisateur ;
- lors de la réception, au niveau du synchroniseur (4), d'une demande de rafraîchissement envoyée par la session d'utilisateur (3) :
- récupérer, au niveau du synchroniseur (4), le dossier d'utilisateur stocké mis à jour,
- récupérer, au niveau du synchroniseur (4), tous les événements dans la file d'attente d'événements (9),
- fusionner, au niveau du synchroniseur (4), le dossier d'utilisateur stocké mis à jour récupéré avec des mises à jour de tous les événements récupérés à partir de la file d'attente d'événements (9) et sauvegarder le dossier fusionné dans le magasin de données (1), et
- fusionner, au niveau du synchroniseur (4), le dossier fusionné avec le dossier de session mis à jour et retourner le résultat à la session d'utilisateur ; et
- lors de la réception, au niveau de la session d'utilisateur (3), d'une instruction pour fermer la session d'utilisateur (3), poser une question à l'utilisateur par l'intermédiaire d'une interface utilisateur de la session d'utilisateur (3) sur le fait de sauvegarder ou de ne pas sauvegarder le dossier de session :
- lors de la réception d'une instruction en provenance de l'utilisateur pour sauvegarder le dossier de session, mettre à jour le dossier de session par l'intermédiaire de la fusion de données externes reçues, du dossier stocké et du dossier de session, et sauvegarder celui-ci dans le magasin de données (1) ; et
- lors de la non-réception d'une instruction pour sauvegarder le dossier de session ou lors de la réception d'une instruction pour supprimer le dossier de session, ne pas sauvegarder le dossier de session et ne pas mettre à jour le dossier stocké dans le magasin de données (1).

2. Produit de programme informatique stocké dans un support de mémoire lisible par ordinateur non transitoire et effectuant le procédé selon la revendication 1.

3. Synchroniseur pour mettre à jour une session d'utilisateur (3) avec des données externes reçues au niveau d'un magasin de données (1) en provenance de systèmes externes (5, 5') configuré pour effectuer le procédé selon la revendication 1.
